# EUROPEAN PATENT SPECIFICATION

(11) **EP 3 706 448 B1**
(45) Date of publication and mention of the grant of the patent: **19.10.2022**
(21) Application number: 20157893.7
(22) Date of filing: 18.02.2020
(51) Int. Cl.: H04W 4/50, H04W 12/00, G06F 8/61, G06F 21/10

(54) **APPARATUS SETUP SYSTEM, APPARATUS SETUP METHOD, AND ELECTRONIC APPARATUS**
VORRICHTUNGSEINRICHTUNGSSYSTEM, VORRICHTUNGSEINRICHTUNGSVERFAHREN UND ELEKTRONISCHE VORRICHTUNG
SYSTÈME DE CONFIGURATION D'APPAREIL, PROCÉDÉ DE CONFIGURATION D'APPAREIL ET APPAREIL ÉLECTRONIQUE

(30) Priority: 05.03.2019 JP 2019039661
(43) Date of publication of application: 09.09.2020
(73) Proprietor: KYOCERA Document Solutions Inc., Osaka-shi, Osaka 540-8585 (JP)
(72) Inventor: NAKAMURA, Hiroshi, Osaka, 540-8585 (JP); IMAI, Satoshi, Osaka, 540-8585 (JP); KAMAKURA, Aya, Osaka, 540-8585 (JP); YOSHIMOTO, Hiroshi, Osaka, 540-8585 (JP)
(74) Representative: Herrero & Asociados, S.L.

(56) References cited:
- US-A1- 2004 230 815
- US-A1- 2006 143 129

## Description

### Field

The present disclosure relates to an apparatus setup system. The present disclosure further relates to an apparatus setup method using the apparatus setup system. The present disclosure further relates to an electronic apparatus included in the apparatus setup system.

### Background

Typically, when an electronic apparatus (for example, device such as image forming apparatus) is replaced, a license is transferred from an old electronic apparatus to a new electronic apparatus.

In a known technical field of electronic apparatuses, an application software (application program. Hereinafter referred to as "application") operates in the upper stage of basic software (including operating system and middleware. Hereinafter referred to as "platform".) for operating an electronic apparatus. Further, an E-license key (hereinafter referred to as activation key) issued for license of an application is known.

US 2004/230815 A1 discloses authenticating an upgrade to computer readable program code. The computer readable program code comprises a computer readable program code causing a computer processor to enable upgrade if a processed identifier key matches a processed unique machine identifier, or to fail the upgrade.

### Summary

It is desirable to reduce a downtime without an activation key when an electronic apparatus is replaced, where the electronic apparatus has an application that requires an activation key for activation.

The invention is defined by the subject matter of the independent claims. Advantageous enhancements are subject to the dependent claims.

### Brief Description of Figures

Fig. 1 shows an apparatus setup system according to an embodiment of the present disclosure;
Fig. 2 shows a hardware configuration of a first electronic apparatus;
Fig. 3 shows a hardware configuration of a second electronic apparatus;
Fig. 4 shows a functional configuration of the first electronic apparatus;
Fig. 5 shows a functional configuration of the second electronic apparatus;
Fig. 6 shows an operational flow of the first electronic apparatus and the second electronic apparatus;
Fig. 7 shows a network configuration of an apparatus setup system according to a modification example of the present embodiment; and
Fig. 8 shows a hardware configuration of a server apparatus.

### Detailed Description

Hereinafter, an embodiment of the present disclosure will be described with reference to the drawings.

### 1. Apparatus setup system

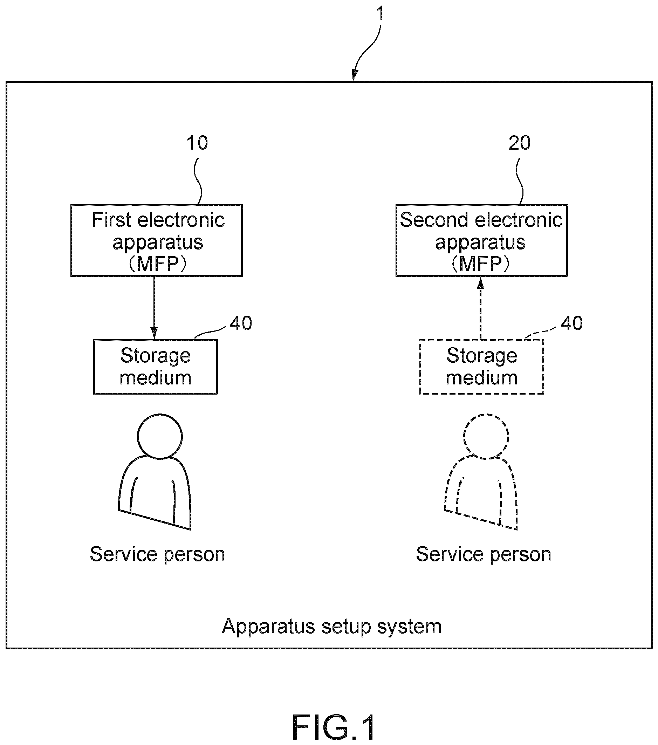

Fig. 1 shows an apparatus setup system according to an embodiment of the present disclosure.

The apparatus setup system 1 includes the first electronic apparatus 10 and the second electronic apparatus 20. Each of the first electronic apparatus 10 and the second electronic apparatus 20 is, for example, an image forming apparatus (for example, Multifunction Peripheral, MFP).

The first electronic apparatus 10 is an old apparatus to be replaced. The second electronic apparatus 20 is a new apparatus to be carried into a site of the first electronic apparatus 10.

In the first electronic apparatus 10, a certain application is installed in the upper stage of a platform including an operating system and the like.

For example, a provider (application license seller, etc.) and a user (user of the first electronic apparatus 10 and the second electronic apparatus 20) have a license agreement, in which the application is installed in only one apparatus. In the present embodiment, the user activates the application with an activation key provided by the provider. As a result, it is assured that the application is installed in only one apparatus.

Various activation key modes are conceivable. In the present embodiment, an activation key is a text generated on a basis of an electronic apparatus identifier (serial number) unique to one electronic apparatus under a license agreement and an application identifier (serial number) identifying the application.

However, it may be burdensome for a user to file an application for an issue of an activation key. It may take time to issue the activation key. A provider may sometimes not issue the activation key promptly for sudden replacement.

In the present embodiment, when an electronic apparatus is replaced, an application for an issue of an activation key is not filed. Instead, an application is provisionally activated in a new electronic apparatus by means of provisional setup. In short, the second electronic apparatus 20 is set up in a provisional setup mode. As a result, it takes a shorter time for replacement.

The package file P, which includes information necessary for the provisional setup, is transferred from the first electronic apparatus 10 to the second electronic apparatus 20. A method of transferring the package file P is not limited.

For example, in the present embodiment, a service person visits a client site of the first electronic apparatus 10, and operates the first electronic apparatus 10. The first electronic apparatus 10 outputs the package file P in the storage medium 40 such as a USB (Universal Serial Bus) memory. After that, the service person inputs the storage medium 40 in the second electronic apparatus 20 at a service center or the like. The second electronic apparatus 20 reads the storage medium 40, and inputs the package file P in the read storage medium 40 in the second electronic apparatus 20. Note that the package file P may be transferred online via a network.

### 2. Hardware configuration of electronic apparatus

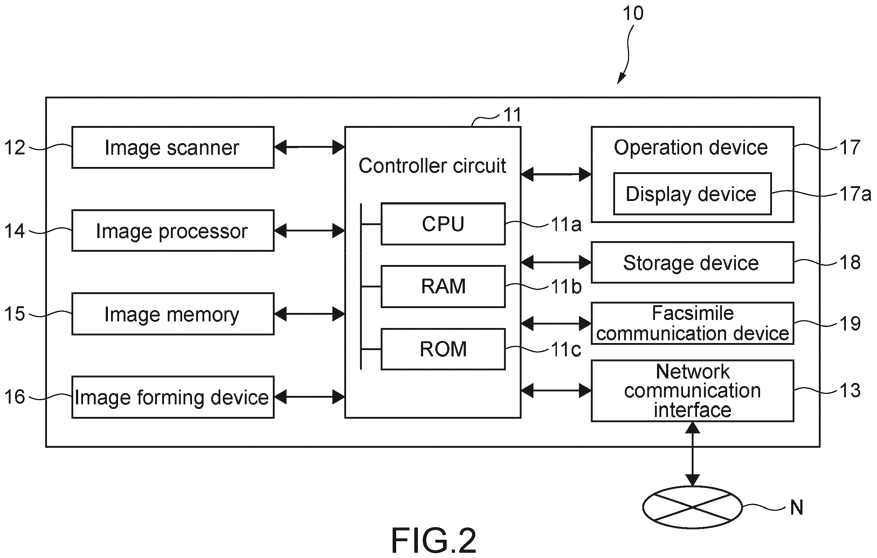

Fig. 2 shows a hardware configuration of a first electronic apparatus.

The first electronic apparatus 10 includes the controller circuit 11. The controller circuit 11 includes the CPU (Central Processing Unit) 11a, the RAM (Random Access Memory) 11b, the ROM (Read Only Memory) 11c, dedicated hardware circuits, and the like and performs overall operational control of the first electronic apparatus 10. The CPU 11a loads information processing programs stored in the ROM 11c in the RAM 11b and executes the information processing programs. The ROM 11c is a nonvolatile memory that stores programs executed by the CPU 11a, data, and the like. The ROM 11c is an example of a non-transitory computer readable recording medium.

The controller circuit 11 is connected to the image scanner 12, the image processor 14 (including GPU (Graphics Processing Unit)), the image memory 15, the image forming device 16 (printer), the operation device 17 including the display device 17a (touch panel), the large volume nonvolatile storage device 18 such as an HDD (Hard Disk Drive) or an SSD (Solid State Drive), the facsimile communication device 19, the network communication interface 13, and the like. The controller circuit 11 performs operational control of the respective devices connected thereto and sends/receives signals and data to/from those devices. The operation device 17 (touch panel) is one mode of an input module. A sound input module including a microphone may be provided as an input module.

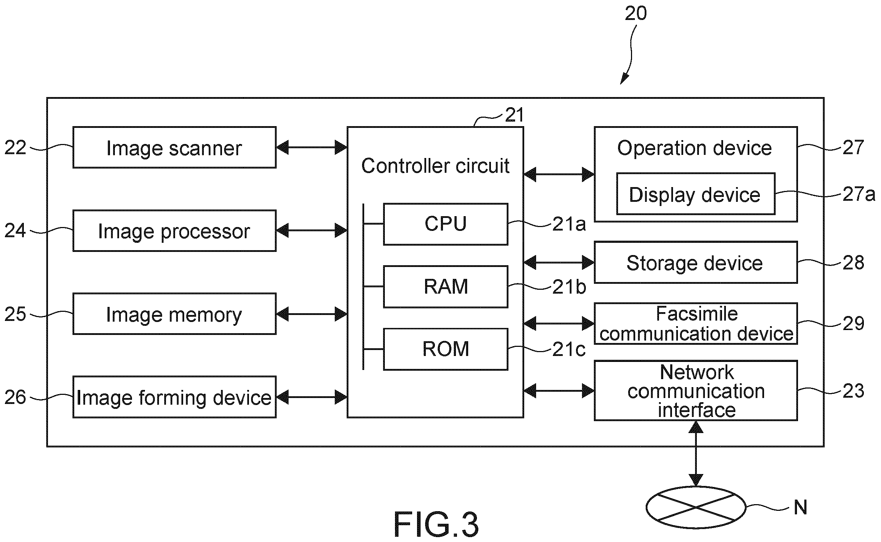

Fig. 3 shows a hardware configuration of a second electronic apparatus.

A hardware configuration of the second electronic apparatus 20 is similar to the hardware configuration of the first electronic apparatus 10. The second electronic apparatus 20 includes the controller circuit 21. The controller circuit 21 includes the CPU (Central Processing Unit) 21a, the RAM (Random Access Memory) 21b, the ROM (Read Only Memory) 21c, dedicated hardware circuits, and the like and performs overall operational control of the second electronic apparatus 20. The CPU 21a loads information processing programs stored in the ROM 21c in the RAM 21b and executes the information processing programs. The ROM 21c is a nonvolatile memory that stores programs executed by the CPU 21a, data, and the like. The ROM 21c is an example of a non-transitory computer readable recording medium.

The controller circuit 21 is connected to the image scanner 22, the image processor 24 (including GPU (Graphics Processing Unit)), the image memory 25, the image forming device 26 (printer), the operation device 27 including the display device 27a (touch panel), the large volume nonvolatile storage device 28 such as an HDD (Hard Disk Drive) or an SSD (Solid State Drive), the facsimile communication device 29, the network communication interface 23, and the like. The controller circuit 21 performs operational control of the respective devices connected thereto and sends/receives signals and data to/from those devices. The operation device 27 (touch panel) is one mode of an input module. A sound input module including a microphone may be provided as an input module.

### 3. Functional configuration of electronic apparatus

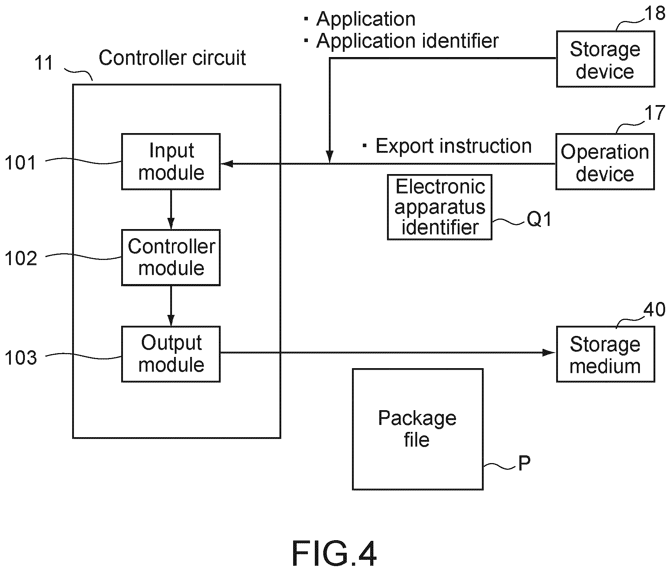

Fig. 4 shows a functional configuration of the first electronic apparatus.

In the controller circuit 11 of the first electronic apparatus 10, the CPU 11a loads an information processing program stored in the ROM 11c in the RAM 11b and executes the information processing program to operate as the input module 101, the controller module 102, and the output module 103.

The input module 101 inputs an export instruction, the electronic apparatus identifier Q1, an application, and an application identifier in the controller module 102. The electronic apparatus identifier Q1 is a value unique to the second electronic apparatus 20. The application identifier is, for example, a serial number, and includes information identifying the application.

For example, in the present embodiment, a service person inputs the export instruction by operating the operation device 17.

For example, in the present embodiment, the service person inputs the electronic apparatus identifier Q1 by operating the operation device 17. Alternatively, the input module 101 may download the electronic apparatus identifier Q1 from a server apparatus (not shown) via a network, and input the electronic apparatus identifier Q1 in the controller module 102.

For example, in the present embodiment, the controller circuit 11 reads the application and the application identifier stored in the storage device 18, and inputs the application and the application identifier in the controller module 102.

Where an export instruction is input, the controller module 102 generates the package file P on the basis of the application, the application identifier, and the electronic apparatus identifier Q1.

The output module 103 writes the package file P in the storage medium 40.

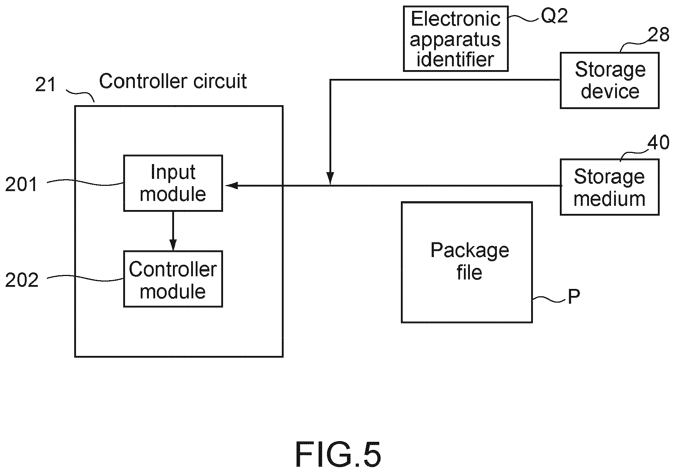

Fig. 5 shows a functional configuration of the second electronic apparatus.

In the controller circuit 21 of the second electronic apparatus 20, the CPU 21a loads an information processing program stored in the ROM 21c in the RAM 21b and executes the information processing program to operate as the input module 201 and the controller module 202.

The input module 201 inputs the electronic apparatus identifier Q2 and the package file P in the controller module 202. The electronic apparatus identifier Q2 is a value unique to the second electronic apparatus 20.

For example, in the present embodiment, the storage device 28 stores the electronic apparatus identifier Q2. The input module 201 reads the electronic apparatus identifier Q2 from the storage device 28, and inputs the electronic apparatus identifier Q2 in the controller module 202. Alternatively, the input module 201 may download the electronic apparatus identifier Q2 from a server apparatus (not shown) via a network, and input the electronic apparatus identifier Q2 in the controller module 202.

For example, in the present embodiment, the package file P is stored in the storage medium 40. The input module 201 reads the package file P from the storage medium 40, and inputs the package file P in the controller module 202.

Where the package file P is input, the controller module 202 determines whether or not the package file P matches a certain condition, decompresses the package file P, and provisionally sets up the application.

Functional configurations of the electronic apparatuses have been described above. Hereinafter, an operational flow of the electronic apparatuses will be described.

### 4. Operational flow of electronic apparatuses

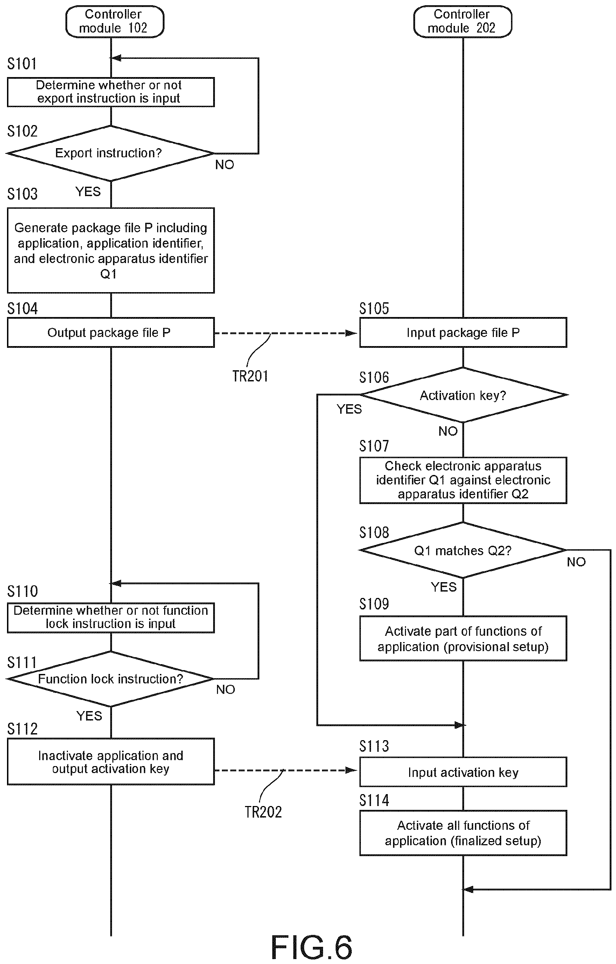

Fig. 6 shows an operational flow of the first electronic apparatus and the second electronic apparatus.

The controller module 102 of the controller circuit 11 determines whether or not an export instruction is input (Step S101). For example, where the input module 101 inputs an export instruction in the controller module 102, the controller module 102 determines that an export instruction is input (Step S102, YES). Meanwhile, where no export instruction is input in the controller module 102, the controller module 102 determines that no export instruction is input (Step S102, NO).

Where an export instruction is input, the controller module 102 generates the package file P including an application, an application identifier, and the electronic apparatus identifier Q1 (Step S103).

Subsequently, the controller module 102 controls the output module 103 to output the generated package file P to the storage medium 40 (Step S104).

Note that, for example, in the present embodiment, the input module 101 inputs the export instruction and the electronic apparatus identifier Q1 on the basis of manual input of a service person. The output module 103 outputs the package file P by writing the package file P in the storage medium 40 such as a USB memory inserted by a service person. However, this is merely an example. Note that, in this case, the service person visits a client site of the first electronic apparatus 10 and operates as described above.

The package file P is output from the first electronic apparatus 10, and is transferred to and input in the second electronic apparatus 20 (TR201). For example, the package file P is transferred via the storage medium 40 and a service person. However, this is merely an example.

Where the input module 201 inputs the package file P (Step S105), the controller module 202 of the controller circuit 21 determines whether or not the package file P includes an activation key (Step S106).

Where the package file P has no activation key (Step S106, NO), the controller module 202 checks the electronic apparatus identifier Q1 included in the package file P against the electronic apparatus identifier Q2 of the apparatus itself for check stored in the storage device 28 of the apparatus itself (the second electronic apparatus 20) (Step S107).

Subsequently, the controller module 202 determines whether or not the electronic apparatus identifier Q1 matches the electronic apparatus identifier Q2 (Step S108). Where the electronic apparatus identifier Q1 matches the electronic apparatus identifier Q2 (Step S108, YES), the controller module 202 installs the application such that a part of functions of the application, which is identified by the application identifier included in the package file P, is activated (Step S109). The install for activating a part of functions will be referred to as provisional setup.

Details of the part of functions of the application activated by the controller module 202 are not limited. For example, in the present embodiment, in Step S109, the controller module 202 activates a function of changing setting of the application or newly configuring setting of the application.

The controller module 202 restricts a part of functions of the provisionally-setup application. Restricted functions are not limited. For example, in the present embodiment, the application is controlled such that the application is incapable of executing print jobs and the like. In addition, for example, the controller module 202 may control the application such that the application is incapable of using an API (Application-Program Interface) provided by the platform. Alternatively, the application may be controlled such that functions, which require authentication to use the second electronic apparatus 20, are restricted. In this case, for example, an authenticated user is limited to a service person, and a user of the second electronic apparatus 20 may thereby be limited.

To activate an application or activation of an application at least means to install an application in an electronic apparatus and to establish a status where various settings of the application are acceptable, i.e., for example, a status where to display an application setting window is allowed. Then, according to the present embodiment, the second electronic apparatus 20 is capable of activating an application without an activation key.

There are levels of activation of an application. Then the processing from Step S101 to Step S109 of the apparatus setup system 1 realizes minimum-level activation. In the present embodiment, the following processing is further executed. As a result, full activation or finalized setup is realized, in which access to all the functions of the application is allowed.

Note that, for example, in the present embodiment, a service person inserts the storage medium 40 such as a USB memory in the second electronic apparatus 20 at a service center or the like to input the package file P. However, this is merely an example.

Meanwhile, the controller module 102 of the controller circuit 11 determines whether or not a function lock instruction is input (Step S110). For example, where the input module 101 inputs a function lock instruction in the controller module 102, the controller module 102 determines that a function lock instruction is input (Step S111, YES). Meanwhile, where a function lock instruction is not input in the controller module 102, the controller module 102 determines that no function lock instruction is input (Step S111, NO).

Where a function lock instruction is input, the controller module 102 locks functions of the application installed in the first electronic apparatus 10 and inactivates the functions. In addition, the controller module 102 controls the output module 103 to output an activation key, with which the application is activated in one electronic apparatus (Step S112).

An output mode of the activation key is not limited. In the present embodiment, for example, the output module 103 displays texts showing the activation key on the display device 17a.

The activation key is output from the first electronic apparatus 10, and is transferred to and input in the second electronic apparatus 20 (TR202). For example, the activation key is transferred via the storage medium 40 and a service person. However, this is merely an example.

Where the input module 201 inputs the activation key (Step S113), the controller module 202 of the controller circuit 21 activates all the functions of the application (Step S114).

Note that, for example, in the present embodiment, a service person visits the client site of the first electronic apparatus 10, locks the functions of the first electronic apparatus 10, removes the first electronic apparatus 10, carries the second electronic apparatus 20 into the client site, and executes finalized setup of the second electronic apparatus 20.

According to the present embodiment described above, the first electronic apparatus 10 includes the controller module 102. The controller module 102 generates the package file P including the electronic apparatus identifier Q1, which may be the same as the electronic apparatus identifier Q2 of the second electronic apparatus 20. The second electronic apparatus 20 includes the controller module 202 in which the package file P is input. The controller module 202 checks the electronic apparatus identifier Q1 included in the package file P against the electronic apparatus identifier Q2. Where the electronic apparatus identifier Q1 matches the electronic apparatus identifier Q2, the controller module 202 activates a part of functions of the application identified by the application identifier included in the package file P. As a result, the application is provisionally activated without an activation key, and an interface for various setting operations is thereby activated. As a result, a downtime is reduced.

### 5. Modification examples

In the present embodiment, a data structure or a format of information included in the package file P is not limited. However, the controller module 102 of the first electronic apparatus 10 may encode the package file P to avoid changes of the file. Specifically, the controller module 102 encodes the electronic apparatus identifier Q1 of the second electronic apparatus 20 to avoid changes of the electronic apparatus identifier Q1. In this case, it is possible to prevent activation of an application in multiple electronic apparatuses by using the package file P output from one electronic apparatus (in this case, the first electronic apparatus 10).

In the present embodiment, when the input module 201 inputs the package file P in the controller module 202, the controller module 202 confirms whether or not the package file P includes an activation key (Step S106). After that, the controller module 202 checks the electronic apparatus identifier Q1 against the electronic apparatus identifier Q2 (Step S107). However, the order may be inversed. In this case, the controller module 202 firstly checks the electronic apparatus identifier Q1 against the electronic apparatus identifier Q2. If the electronic apparatus identifier Q1 matches the electronic apparatus identifier Q2, the controller module 202 determines that an activation key is not required. If the electronic apparatus identifier Q1 does not match the electronic apparatus identifier Q2, the controller module 202 determines that an activation key is required.

In the present embodiment, when an activation key is input, the controller module 202 of the second electronic apparatus 20 activates all the functions of the application. However, the controller module 202 may activate not all the functions. Instead, the number of functions activated with an activation key may only be relatively larger than number of functions activated (provisionally setup) without an activation key. The number of activated functions in the provisional setup status is relatively smaller than the number of activated functions in the finalized setup status. In other words, functions are restricted in the provisional setup status. The reason is as follows. In the first electronic apparatus 10, the application is still activated in the finalized setup status until functions are locked.

In an example of the present embodiment, a service person transfers the package file P (TR201) and transfers an activation key (TR202). However, an electronic apparatus may transfer them to another electronic apparatus via a network in the following mode.

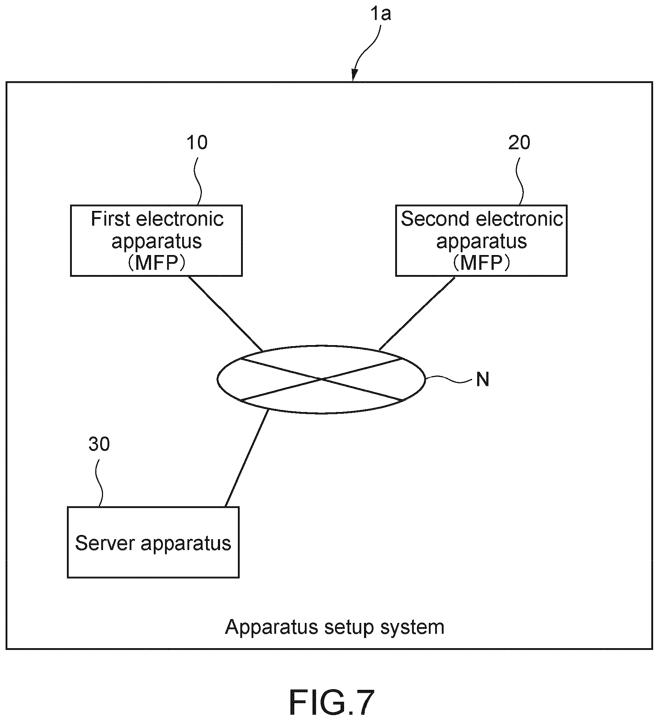

Fig. 7 shows a network configuration of an apparatus setup system according to a modification example of the present embodiment.

In the present modification example, the apparatus setup system 1a includes the first electronic apparatus 10, the second electronic apparatus 20, and the server apparatus 30. The first electronic apparatus 10, the second electronic apparatus 20, and the server apparatus 30 are communicably connected to each other via network N.

The configuration of each of the first electronic apparatus 10 and the second electronic apparatus 20 is the same as that of the embodiment, and will not be described.

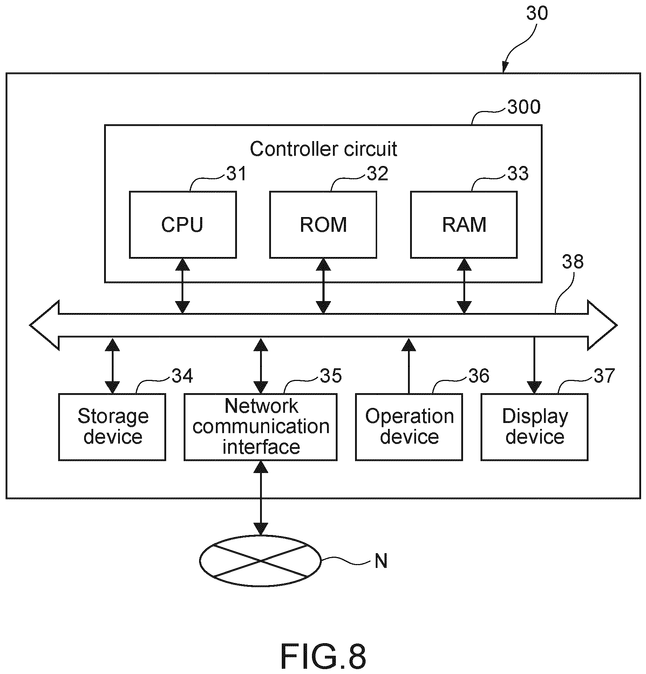

Fig. 8 shows a hardware configuration of a server apparatus.

The server apparatus 30 includes the CPU 31, the ROM 32, the RAM 33, the storage device 34, which is a large-volume nonvolatile memory such as an HDD or an SSD, the network communication interface 35, the operation device 36, and the display device 37, and the bus 38 connecting them to each other.

The controller circuit 300 includes the CPU 31, the ROM 32, and the RAM 33. The CPU 31 loads information processing programs stored in the ROM 32 in the RAM 33 and executes the information processing programs. The ROM 32 stores programs executed by the CPU 31, data, and the like nonvolatile. The ROM 32 is an example of a non-transitory computer readable recording medium.

In the present modification example, the server apparatus 30 transfers the package file P and the activation key of Fig. 6 by using the network configuration and the hardware configuration. Further, the server apparatus 30 inputs the export instruction and the package file P.

Specifically, the controller module 102 of the first electronic apparatus 10 controls the output module 103 to output the package file P and the activation key to the server apparatus 30. Further, the controller module 102 controls the input module 101 to input, to the controller module 102, the export instruction and the function lock instruction input in the first electronic apparatus 10 from the server apparatus 30.

The controller module 202 of the second electronic apparatus 20 controls the input module 201 to input, in the controller module 202, the package file P and the activation key input in the second electronic apparatus 20 from the server apparatus 30.

The controller circuit 300 of the server apparatus 30 receives the package file P from the first electronic apparatus 10 via network communication interface 35. Then the controller circuit 300 temporarily stores the package file P in the storage device 34, and controls the network communication interface 35 to send the package file P to the second electronic apparatus 20.

According to the aforementioned modification example, a downtime may be reduced independent of work of a service person.

Any configurations disclosed in the present embodiment may be embodied in combination.

### 6. Conclusion

Typically, it is necessary to transfer a license and set up a new electronic apparatus at a site of an electronic apparatus. It takes time to transfer a license and set up a new electronic apparatus, which is a downtime. In other words, a user of the electronic apparatus is incapable of using the electronic apparatus during the downtime. Setup includes obtaining an activation key and application of the activation key in an electronic apparatus.

When an electronic apparatus is replaced suddenly, it may take long time to apply an obtained activation key after an application to issue the activation key is filed. In this case, according to the aforementioned method of transferring a license and setting up a new electronic apparatus at a site of an electronic apparatus, the whole schedule of replacement work may be longer or the work schedule may not be prepared, which is troublesome.
(1) To the contrary, according to the present embodiment, the first electronic apparatus exports a package file for transferring an application including the electronic apparatus identifier of the second electronic apparatus. When the second electronic apparatus imports the package file, the second electronic apparatus checks the electronic apparatus identifier included in the package file against the stored electronic apparatus identifier. Only if the electronic apparatus identifier included in the package file matches the stored electronic apparatus identifier after the check, the application is activated. According to the present embodiment, it is not necessary to issue an activation key or the like, which is used to activate the application by the second electronic apparatus for transferring a license of the application, to the second electronic apparatus. As a result, according to the present embodiment, it is possible to reduce a downtime without an activation key when an electronic apparatus is replaced, where the electronic apparatus has an application that requires an activation key for activation.
(2) According to the present embodiment, where the package file for transferring an application fails to include an activation key to activate the application in the second electronic apparatus, the second electronic apparatus checks the electronic apparatus identifier included in the package file against the stored electronic apparatus identifier, and activates the application. As a result, according to the present embodiment, even if an activation key is not issued to the second electronic apparatus, it is possible to reduce a downtime when an electronic apparatus is replaced, where the electronic apparatus has an application that requires transfer of a license.
(3) According to the present embodiment, the number of functions activated with an activation key is larger than the number of functions activated without an activation key. As a result, according to the present embodiment, functions are restricted when the application is activated without an activation key. As a result, a user of the second electronic apparatus is advised to have an activation key without losing an application provider's right unreasonably.
(4) According to the present embodiment, an application installed in the first electronic apparatus, from which the application is transferred, is inactivated. The second electronic apparatus outputs an activated activation key. As a result, according to the present embodiment, a downtime is reduced. Further, according to the present embodiment, an application provider does not need to issue a new activation key. As a result, a burden of the issue process may be reduced, which is beneficial. It is possible to reduce a situation where the application provider urgently supports a sudden application, which is beneficial.
(5) According to the present embodiment, a server apparatus inputs an export instruction in the first electronic apparatus, and inputs the package file in the second electronic apparatus. As a result, the input and output are executed independent of work of a service person or the like.

It should be understood by those skilled in the art that various modifications, combinations, sub-combinations and alterations may occur depending on design requirements and other factors insofar as they are within the scope of the appended claims.

## Claims

1. An apparatus setup system (1), comprising:
a first electronic apparatus (10); and
a second electronic apparatus (20),
the first electronic apparatus (10) including
a first storage device (18) that stores an application and an application identifier unique to the application, and
a first controller module (102) configured to generate a package file (P) if an export instruction is input, the export instruction instructing to export an application, the package file (P) at least including the application identifier and an electronic apparatus identifier (Q1) of one different electronic apparatus (20), and to output an activation key for activating the application;
the second electronic apparatus (20) including
a second storage device (28) that stores an electronic apparatus identifier (Q2) identifying the second electronic apparatus (20), and
a second controller module (202) configured to
if the package file (P) is input, check the electronic apparatus identifier (Q1) included in the input package file (P) against the electronic apparatus identifier (Q2) stored in the second storage device (28),
if it is determined that the package file (P) fails to include an activation key for activating the application and it is determined that the electronic apparatus identifier (Q1) included in the input package file (P) matches the electronic apparatus identifier (Q2) stored in the second storage device (28), provisionally activate a part of functions of the application identified by the application identifier included in the package file (P), and
if the activation key output by the first electronic apparatus (10) is input in the second electronic apparatus (20), full-activate the functions of the application, a number of the functions of the application full-activated by using the activation key being larger than a number of the part of functions of the application provisionally activated without the activation key.

2. The apparatus setup system (1) according to claim 1, wherein
the first controller module (102) is configured to
inactivate the application installed in the first electronic apparatus (10) and output the activation key if a function lock instruction is input in the first electronic apparatus (10), the function lock instruction instructing to lock a function of the application.

3. The apparatus setup system (1) according to any one of claims 1 to 2, further comprising:
a server apparatus (30) including a remote input module configured to input the export instruction in the first electronic apparatus (10) via a communication network, and input the package file (P) in the second electronic apparatus (20) via communication network.

4. An apparatus setup method of setting up a second electronic apparatus (20) executable by an apparatus setup system (1), the apparatus setup system (1) including a first electronic apparatus (10) and the second electronic apparatus (20), the first electronic apparatus (10) including a first input module (101) and a first controller module (102), the second electronic apparatus (20) including a second input module (201) and a second controller module (202), the apparatus setup method comprising:
inputting, by the first input module (101), an export instruction in the first controller module (102), the export instruction instructing to export an application;
outputting, by the first controller module (102), a package file (P) if the export instruction is input, the package file (P) at least including an electronic apparatus identifier (Q1) of the second electronic apparatus (20) and an application identifier unique to the application;
outputting, by the first controller module (102), an activation key for activating the application;
inputting, by the second input module (201), the package file (P) in the second controller module (202);
if the package file (P) is input, checking, by the second controller module (202), the electronic apparatus identifier (Q1) of the second electronic apparatus (20) included in the input package file (P) against an electronic apparatus identifier (Q2) stored in the second electronic apparatus (20);
if it is determined that the package file (P) fails to include an activation key for activating the application and it is determined that the electronic apparatus identifier (Q1) included in the input package file (P) matches the electronic apparatus identifier (Q2) stored in the second storage device (28), provisionally activating, by the second controller module (202), a part of functions of the application identified by the application identifier included in the package file (P);
inputting, by the second input module (201), the activation key output by the first electronic apparatus (10) in the second electronic apparatus (20); and
if the activation key output by the first electronic apparatus (10) is input in the second electronic apparatus (20), full-activating, by the second controller module (202), the functions of the application, a number of the functions of the application full-activated by using the activation key being larger than a number of the part of functions of the application provisionally activated without the activation key.

5. An electronic apparatus (20), comprising:
a storage device (28);
an input module (201); and
a controller module (202),
the storage device (28) storing a first electronic apparatus identifier (Q2) identifying the second electronic apparatus (20),
the input module (201) inputting a package file (P) for importing an application in the electronic apparatus (20),
the controller module (202) being configured to
if a package file (P) is input, the package file (P) at least including an application identifier unique to the application and a second electronic apparatus identifier (Q1), check the first electronic apparatus identifier (Q2) against the second electronic apparatus identifier (Q1),
if it is determined that the package file (P) fails to include an activation key for activating the application and it is determined that the electronic apparatus identifier (Q1) included in the input package file (P) matches the electronic apparatus identifier (Q2) stored in the second storage device (28), provisionally activate a part of functions of the application identified by the application identifier included in the package file (P), and
if an activation key for activating the application is input in the electronic apparatus (20), full-activate the functions of the application, a number of the functions of the application full-activated by using the activation key being larger than a number of the part of functions of the application provisionally activated without the activation key.

## Patentansprüche

1. Ein Vorrichtungseinrichtungssystem (1), welches folgendes umfasst:
eine erste elektronische Vorrichtung (10); und
eine zweite elektronische Vorrichtung (20),
wobei die erste elektronische Vorrichtung (10)
eine erste Speichervorrichtung (18), das eine Anwendung und einen Anwendungsbezeichner der für die Anwendung eindeutigen ist, speichert, und
ein erstes Controller-Modul (102) enthält, das dazu konfiguriert ist, eine Paketdatei (P) zu erzeugen, falls eine Exportanweisung eingegeben wird, wobei die Exportanweisung anweist, eine Anwendung zu exportieren, wobei die Paketdatei (P) zumindest den Anwendungsbezeichner und einen Bezeichner der elektronischen Vorrichtung (Q 1) einer anderen elektronischen Vorrichtung (20) enthält, und einen Aktivierungsschlüssel zum Aktivieren der Anwendung auszugeben;
wobei die zweite elektronische Vorrichtung (20)
eine zweite Speichervorrichtung (28), das einen Bezeichner der elektronischen Vorrichtung (Q2) speichert, die die zweite elektronische Vorrichtung (20) identifiziert, und
ein zweites Controller-Modul (202) enthält, das dazu konfiguriert ist,
falls die Paketdatei (P) eingegeben wird, der in der eingegebenen Paketdatei (P) enthaltener Bezeichner der elektronischen Vorrichtung (Q1) mit dem Bezeichner der elektronischen Vorrichtung (Q2) abzugleichen, der in der zweiten Speichervorrichtung (28) gespeichert ist,
falls festgestellt wird, dass die Paketdatei (P) keinen Aktivierungsschlüssel zum Aktivieren der Anwendung enthält und festgestellt wird, dass der in der eingegebenen Paketdatei (P) enthaltene Bezeichner der elektronischen Vorrichtung (Q1) mit dem Bezeichner der elektronischen Vorrichtung (Q2), der in der zweiten Speichervorrichtung (28) gespeichert ist, übereinstimmt,
einen Teil der Funktionen der Anwendung, die durch Anwendungsbezeichner identifiziert wird, der in der Paketdatei (P) enthalt ist, vorläufig zu aktivieren und
falls der Aktivierungsschlüssel, der von der ersten elektronischen Vorrichtung (10) ausgegeben wird, in die zweite elektronische Vorrichtung (20) eingegeben wird, die Funktionen der Anwendung vollständig zu aktivieren, wobei eine Anzahl der Funktionen der Anwendung, die durch Verwendung des Aktivierungsschlüssels vollständig aktiviert wird, größer ist als eine Anzahl des Teils der Funktionen der Anwendung, die ohne den Aktivierungsschlüssel vorläufig aktiviert wird.

2. Das Vorrichtungseinrichtungssystem (1) nach Anspruch 1, wobei
das erste Kontroller-Modul (102) dazu konfiguriert ist,
die in der ersten elektronischen Vorrichtung (10) installierte Anwendung zu inaktivieren und den Aktivierungsschlüssel auszugeben, falls eine Funktionssperranweisung in die erste elektronische Vorrichtung (10) eingegeben wird, wobei die Funktionssperranweisung anweist, eine Funktion der Anwendung zu sperren.

3. Das Vorrichtungseinrichtungssystem (1) nach irgendeinem der Ansprüche 1 bis 2 umfasst ferner folgendes:
eine Servervorrichtung (30), die ein Ferneingabemodul enthält, das dazu konfiguriert ist, die Exportanweisung in die erste elektronische Vorrichtung (10) über ein Kommunikationsnetzwerk einzugeben und die Paketdatei (P) in die zweite elektronische Vorrichtung (20) über ein Kommunikationsnetzwerk einzugeben.

4. Ein Vorrichtungseinrichtungsverfahren zum Einrichten einer zweiten elektronischen Vorrichtung (20), das durch ein Vorrichtungseinrichtungssystem (1) ausführbar ist, wobei das Vorrichtungseinrichtungssystem (1) eine erste elektronische Vorrichtung (10) und die zweite elektronische Vorrichtung (20) enthält, wobei die erste elektronische Vorrichtung (10) ein erstes Eingabemodul (101) und ein erstes Kontroller-Modul (102) enthält, die zweite elektronische Vorrichtung (20) ein zweites Eingabemodul (201) und ein zweites Kontroller-Modul (202) enthält, wobei das Vorrichtungseinrichtungsverfahren folgendes umfasst:
Eingeben, durch das erste Eingabemodul (101), einer Exportanweisung in das erste Controller-Modul (102), wobei die Exportanweisung den Export einer Anwendung anweist;
Ausgeben, durch das erste Steuermodul (102), einer Paketdatei (P) wenn die Exportanweisung eingegeben wird, wobei die Paketdatei (P) zumindest einen Bezeichner der elektronischen Vorrichtung (Q 1) der zweiten elektronischen Vorrichtung (20) und einen für die Anwendung eindeutigen Anwendungsbezeichner enthält;
Ausgeben, Anwendung durch das erste Steuermodul (102), eines Aktivierungsschlüssels zum Aktivieren der Anwendung;
Eingeben, durch das zweite Eingabemodul, (201) der Paketdatei (P) in das zweite Kontroller-Modul (202);
falls die Paketdatei (P) eingegeben wird, Abgleichen, durch das zweite Kontroller-Modul (202), des Bezeichners der elektronischen Vorrichtung (Q1) der zweiten elektronischen Vorrichtung (20), der in der eingegebenen Paketdatei (P) enthalten ist, mit einem Bezeichner der elektronischen Vorrichtung (Q2), der in der zweiten elektronischen Vorrichtung (20) gespeichert ist;
falls festgestellt wird, dass die Paketdatei (P) keinen Aktivierungsschlüssel zum Aktivieren der Anwendung enthält und festgestellt wird, dass der Bezeichner der elektronischen Vorrichtung (Q1), der in der eingegebene Paketdatei (P) enthalten ist, mit dem Bezeichner der elektronischen Vorrichtung (Q2), der in der zweiten Speichervorrichtung (28) gespeichert ist, übereinstimmt, wodurch vorläufig, durch das zweite Controller-Modul (202) ein Teil der Funktionen der Anwendung, die durch den Anwendungsbezeichner identifiziert wird, der in der Paketdatei (P) enthalten ist, aktiviert wird;
Eingeben, durch das zweite Eingabemodul (201) des Aktivierungsschlüssels, der von der ersten elektronischen Vorrichtung (10) in die zweite elektronische Vorrichtung (20) ausgegeben wurde; und
falls der Aktivierungsschlüssel, der von der ersten elektronischen Vorrichtung (10) ausgegeben wird, in die zweite elektronische Vorrichtung (20) eingegeben wird, vollständiges Aktivieren, durch das zweite Kontroller-Modul (202), der Funktionen der Anwendung, wobei eine Anzahl der Funktionen der Anwendung, die unter Verwendung des Aktivierungsschlüssels vollständig aktiviert sind, größer ist als eine Anzahl des Teils der Funktionen der Anwendung, die ohne den Aktivierungsschlüssel vorläufig aktiviert wird.

5. Eine elektronische Vorrichtung (20), welches folgendes umfasst:
eine Speichervorrichtung (28);
ein Eingabemodul (201); und
ein Controller-Modul (202),
wobei die Speichervorrichtung (28) einen ersten elektronischen Bezeichner der elektronischen Vorrichtung (Q2) speichert, der di zweite elektronische Vorrichtung (20) identifiziert,
wobei das Eingabemodul (201) eine Paketdatei (P) zum Importieren einer Anwendung in die elektronische Vorrichtung (20) eingibt,
wobei das Kontroller-Modul (202) dazu konfiguriert ist,
falls eine Paketdatei (P) eingegeben wird, wobei die Paketdatei (P) zumindest einen für die Anwendung eindeutigen Anwendungsbezeichner und einen zweiten Bezeichner der elektronischen Vorrichtung (Q1) enthält, den ersten Bezeichner des elektronischen Gerätes (Q2) mit dem zweiten Bezeichner des elektronischen Gerätes (Q1) abzugleichen,
falls festgestellt wird, dass die Paketdatei (P) keinen Aktivierungsschlüssel zum Aktivieren der Anwendung enthält und festgestellt wird, dass der Bezeichner der elektronischen Vorrichtung (Q1), der in der eingegebenen Paketdatei (P) enthalten ist mit dem Bezeichner der elektronischen Vorrichtung (Q2), der in der zweiten Speichervorrichtung (28) gespeichert ist übereinstimmt,
einen Teil der Funktionen der Anwendung, die durch den in der Paketdatei (P) enthaltenen Anwendungsbezeichner identifiziert wird, vorläufig zu aktivieren, und
falls ein Aktivierungsschlüssel zum Aktivieren der Anwendung in die elektronische Vorrichtung (20) eingegeben wird, die Funktionen der Anwendung vollständig zu aktivieren, wobei eine Anzahl der Funktionen der Anwendung, die unter Verwendung des Aktivierungsschlüssels vollständig aktiviert wurden, größer ist als eine Anzahl des Teils der Funktionen der Anwendung, die ohne den Aktivierungsschlüssel vorläufig aktiviert wird.

## Revendications

1. Système de réglage d'appareil (1), comprenant :
un premier appareil électronique (10) ; et
un deuxième appareil électronique (20),
le premier appareil électronique (10) incluant
un premier dispositif de stockage (18) qui stocke une application et un identifiant d'application propre à l'application, et
un premier module de dispositif de commande (102) configuré pour générer un fichier de package (P) si une instruction d'exportation est entrée, l'instruction d'exportation donnant l'ordre d'exporter une application, le fichier de package (P) incluant au moins l'identifiant d'application et un identifiant d'appareil électronique (Q1) d'un appareil électronique (20) différent, et pour délivrer une clé d'activation pour activer l'application ;
le deuxième appareil électronique (20) incluant
un deuxième dispositif de stockage (28) qui stocke un identifiant d'appareil électronique (Q2) identifiant le deuxième appareil électronique (20), et
un deuxième module de dispositif de commande (202) configuré pour
si le fichier de package (P) est entré, vérifier l'identifiant d'appareil électronique (Q1) inclus dans le fichier de package (P) entré par rapport à l'identifiant d'appareil électronique (Q2) stocké dans le deuxième dispositif de stockage (28),
s'il est déterminé que le fichier de package (P) n'arrive pas à inclure une clé d'activation pour activer l'application et s'il est déterminé que l'identifiant d'appareil électronique (Q1) inclus dans le fichier de package (P) entré correspond à l'identifiant d'appareil électronique (Q2) stocké dans le deuxième dispositif de stockage (28), activer provisoirement une partie de fonctions de l'application identifiée par l'identifiant d'application inclus dans le fichier de package (P), et
si la clé d'activation délivrée par le premier appareil électronique (10) est entrée dans le deuxième appareil électronique (20), activer complètement les fonctions de l'application, un nombre des fonctions de l'application complètement activées en utilisant la clé d'activation étant supérieur à un nombre de la partie de fonctions de l'application provisoirement activées sans la clé d'activation.

2. Système de réglage d'appareil (1) selon la revendication 1, dans lequel
le premier module de dispositif de commande (102) est configuré pour inactiver l'application installée dans le premier appareil électronique (10) et délivrer la clé d'activation si une instruction de blocage de fonction est entrée dans le premier appareil électronique (10), l'instruction de blocage de fonction donnant l'ordre de bloquer une fonction de l'application.

3. Système de réglage d'appareil (1) selon l'une quelconque des revendications 1 à 2, comprenant en outre :
un appareil serveur (30) incluant un module d'entrée à distance configuré pour entrer l'instruction d'exportation dans le premier appareil électronique (10) via un réseau de communication, et entrer le fichier de package (P) dans le deuxième appareil électronique (20) via le réseau de communication.

4. Procédé de réglage d'appareil consistant à régler un deuxième appareil électronique (20) exécutable par un système de réglage d'appareil (1), le système de réglage d'appareil (1) incluant un premier appareil électronique (10) et le deuxième appareil électronique (20), le premier appareil électronique (10) incluant un premier module d'entrée (101) et un premier module de dispositif de commande (102), le deuxième appareil électronique (20) incluant un deuxième module d'entrée (201) et un deuxième module de dispositif de commande (202), le procédé de réglage d'appareil consistant à :
entrer, par le premier module d'entrée (101), une instruction d'exportation dans le premier module de dispositif de commande (102), l'instruction d'exportation donnant l'ordre d'exporter une application ;
délivrer, par le premier module de dispositif de commande (102), un fichier de package (P) si l'instruction d'exportation est entrée, le fichier de package (P) incluant au moins un identifiant d'appareil électronique (Q1) du deuxième appareil électronique (20) et un identifiant d'application propre à l'application ;
délivrer, par le premier module de dispositif de commande (102), une clé d'activation pour activer l'application ;
entrer, par le deuxième module d'entrée (201), le fichier de package (P) dans le deuxième module de dispositif de commande (202) ;
si le fichier de package (P) est entré, vérifier, par le deuxième module de dispositif de commande (202), l'identifiant d'appareil électronique (Q1) du deuxième appareil électronique (20) inclus dans le fichier de package (P) entré par rapport à un identifiant d'appareil électronique (Q2) stocké dans le deuxième appareil électronique (20) ;
s'il est déterminé que le fichier de package (P) n'arrive pas à inclure une clé d'activation pour activer l'application et s'il est déterminé que l'identifiant d'appareil électronique (Q1) inclus dans le fichier de package (P) entré correspond à l'identifiant d'appareil électronique (Q2) stocké dans le deuxième dispositif de stockage (28), activer provisoirement, par le deuxième module de dispositif de commande (202), une partie de fonctions de l'application identifiée par l'identifiant d'application inclus dans le fichier de package (P) ;
entrer, par le deuxième module d'entrée (201), la clé d'activation délivrée par le premier appareil électronique (10) dans le deuxième appareil électronique (20) ; et
si la clé d'activation délivrée par le premier appareil électronique (10) est entrée dans le deuxième appareil électronique (20), activer complètement, par le deuxième module de dispositif de commande (202), les fonctions de l'application, un nombre des fonctions de l'application complètement activées en utilisant la clé d'activation étant supérieur à un nombre de la partie de fonctions de l'application provisoirement activées sans la clé d'activation.

5. Appareil électronique (20), comprenant :
un dispositif de stockage (28) ;
un module d'entée (201) ; et
un module de dispositif de commande (202),
le dispositif de stockage (28) stockant un premier identifiant d'appareil électronique (Q2) identifiant le deuxième appareil électronique (20),
le module d'entrée (201) entant un fichier de package (P) pour importer une application dans l'appareil électronique (20),
le module de dispositif de commande (202) étant configuré pour
si un fichier de package (P) est entré, le fichier de package (P) incluant au moins un identifiant d'application propre à l'application et un deuxième identifiant d'appareil électronique (Q1), vérifier le premier identifiant d'appareil électronique (Q2) par rapport au deuxième identifiant d'appareil électronique (Q1),
s'il est déterminé que le fichier de package (P) n'arrive pas à inclure une clé d'activation pour activer l'application et s'il est déterminé que l'identifiant d'appareil électronique (Q1) inclus dans le fichier de package (P) entré correspond à l'identifiant d'appareil électronique (Q2) stocké dans le deuxième dispositif de stockage (28), activer provisoirement une partie de fonctions de l'application identifiée par l'identifiant d'application inclus dans le fichier de package (P), et
si une clé d'activation pour activer l'application est entrée dans l'appareil électronique (20), activer complètement les fonctions de l'application, un nombre des fonctions de l'application complètement activées en utilisant la clé d'activation étant supérieur à un nombre de la partie de fonctions de l'application provisoirement activées sans la clé d'activation.
